# EUROPÄISCHE PATENTSCHRIFT

(11) **EP 0 788 920 B1**
(45) Veröffentlichungstag und Bekanntmachung des Hinweises auf die Patenterteilung: **02.11.2000**
(21) Anmeldenummer: 96110603.6
(22) Anmeldetag: 01.07.1996
(51) Int. Cl.: B60K 26/02, G05G 1/14

(54) **Fahrpedaleinheit für Fahrzeuge**
Accelerator pedal unit for vehicles
Ensemble de pédale d'accélération pour véhicules

(30) Priorität: 29.08.1995 DE 19531732
(43) Veröffentlichungstag der Anmeldung: 13.08.1997
(73) Patentinhaber: DaimlerChrysler AG, 70567 Stuttgart (DE)
(72) Erfinder: Papenhagen, Dieter, 71334 Waiblingen (DE); Löchle, Manfred, 70329 Stuttgart (DE); Meyer, Thorsten, 70736 Fellbach (DE)

(56) Entgegenhaltungen:
- EP-A- 0 430 600
- WO-A-94/29584
- DE-A- 2 815 769
- DE-U- 9 409 892
- PATENT ABSTRACTS OF JAPAN vol. 018, no. 479 (M-1669), 7.September 1994 & JP 06 156110 A (TOYOTA AUTOM LOOM WORKS LTD), 3.Juni 1994,

## Beschreibung

Die Erfindung betrifft eine Fahrpedaleinheit für Fahrzeuge nach der im Oberbegriff von Anspruch 1 näher definierten Art.

Aus der gattungsgemäßen WO 94/29584 A1 ist eine Fahrpedaleinheit bekannt, bei der die Lagerstelle des Pedalhebels zwei mit Lagerbohrungen versehene Schenkel eines Halters, welcher U-förmig ausgebildet ist, aufweist.

Aus der EP 0 430 600 B1 ist eine Fahrpedaleinheit für Fahrzeuge mit einem Pedal und einem damit verbundenen Pedalhebel bekannt. Zur Rückstellung in den Leerlauf wirkt auf den Pedalhebel eine spiralförmige Rückstellfeder ein.

Fahrpedaleinheiten sind weiterhin auch aus der DE-OS 28 15 769 und der DE-OS 27 28 787 bekannt. Dabei ist der Pedalhebel an einer Fahrzeugwand, die eine Halterung mit Lagerbohrungen aufweist, gelagert.

Die bekannten Fahrpedaleinheiten sind jedoch relativ kompliziert aufgebaut und ihre Montage erfordert während des Zusammenbaues des Fahrzeuges einen entsprechenden Aufwand. Dies gilt insbesondere für den Einbau der Rückstellfeder und deren Verbindung mit den entsprechenden Fahrpedalteilen.

Der vorliegenden Erfindung liegt daher die Aufgabe zugrunde, die eingangs erwähnten Nachteile des Standes der Technik zu vermeiden, insbesondere eine Fahrpedaleinheit zu schaffen, die für eine rationelle Serienfertigung, insbesondere auch für eine Vormontage, geeignet ist, wobei auch die Rückstellfeder vormontierbar sein soll.

Darüber hinaus soll die Fahrpedaleinheit im Bedarfsfalle auch für eine elektronische bzw. elektrische Weiterleitung der Impulse an den Verbrennungsmotor statt einer Verbindung über einen Seilzug geeignet sein.

Erfindungsgemäß wird diese Aufgabe durch die im kennzeichnenden Teil von Anspruch 1 genannten Merkmale gelöst.

Durch die erfindungsgemäße Anordnung und Verbindung der einzelnen Fahrpedalteile miteinander, insbesondere des Deckels, ist eine weitgehende Vormontage möglich. So ist bzw. sind z.B. die für die Rückstellung des Fahrpedales erforderliche Rückzugsfeder bzw. die Rückzugsfedern durch eine Verbindung mit dem Deckel ebenfalls vormontierbar. Dies bedeutet eine deutliche Vereinfachung im Sinne einer rationellen Serienfertigung. Gleichzeitig sind die Schenkel und damit auch die Rückzugsfeder(n) gegen Beschädigungen und Verschmutzungen von außen abgedeckt.

Zur Montage brauchen die in dem Pedalhebel eingehängten Rückzugsfedern lediglich im noch nicht montierten Zustand des Deckels in diesen eingehängt werden, wonach der Deckel durch eine entsprechende Verschwenkung um eine Drehachse so verschwenkt wird, daß er die Schenkel abdeckt.

Zum Einbau in ein Fahrzeug wird dann die gesamte vormontierte Fahrpedaleinheit mit dem Halter an der vorgesehenen Stelle einer Fahrzeugwand, was im allgemeinen die Spritzwand ist, befestigt.

Vorteilhafte Weiterbildungen und Ausgestaltungen der Erfindung ergeben sich aus den Unteransprüchen und dem prinzipmäßig nachfolgend anhand der Zeichnung beschriebenen Ausführungsbeispiel.

Es zeigt:
- Fig. 1: die erfindungsgemäße Fahrpedaleinheit in einer Explosionsdarstellung;
- Fig. 2: eine perspektivische Ansicht des Fahrpedals mit dem erfindungsgemäßen Deckel vor seiner Lagerung im Halter;
- Fig. 3: eine Seitenansicht, teilweise im Schnitt, der Fahrpedaleinheit kurz vor Lagerung des Deckels;
- Fig. 4: eine Seitenansicht, entsprechend der von Fig. 3, wobei der Deckel auf den Halter gelegt ist;
- Fig. 5: einen Schnitt nach der Linie V-V in der Fig. 4;
- Fig. 6: eine perspektivische Darstellung der Fahrpedaleinheit nach deren Gesamtmontage, und
- Fig. 7: eine perspektivische Darstellung der Fahrpedaleinheit während der Montage.

Die Fahrpedaleinheit weist ein Pedal 1 auf, das in bekannter Weise über eine Steckverbindung 2 mit einem Pedalhebel 3 verbunden ist. Der Pedalhebel 3 ist über ein Lagerauge 4 auf der von der Steckverbindung 2 abgewandten Seite schwenkbar mit einem Halter 5 verbunden. Das Pedal 1 kann im Bedarfsfalle auch noch auf der von der Lagerstelle abgewandten Seite aus über ein gelenkiges Verbindungsteil 6 mit dem Halter 5 verbunden sein.

Das Lagerauge 4 ist über einen Teilbereich seiner äußeren Umfangswand mit zwei parallel nebeneinander angeordneten Teilumfangsschlitzen 8 versehen. Für die Montage von zwei Seilzügen 10 werden diese im Bereich ihrer Enden zu einer Schlaufe 9 bzw. Schlinge geformt. Die beiden Schlaufen 9 werden über die Teilumfangsschlitze 8 von außen her in das Innere des Lagerauges 4, d.h. in dessen Bohrung, eingeführt. Die innere Umfangswand bzw. die Lagerbohrung des Lagerauges 4 ist mit zwei Umfangsnuten 12 versehen, die mit den Teilumfangsschlitzen 8 fluchten. In die beiden Umfangsnuten 12 werden die beiden Schlaufen 9 der Seilzüge 10 eingelegt. Die beiden Seilzüge 10 sind mit Nippeln 7 versehen, die in entsprechend angepaßte Aussparungen 11 in der äußeren Umfangswand des Lagerauges 4 eingelegt bzw. eingespannt werden.

Die beiden wieder aus den Teilumfangsschlitzen 8 herausgeführten Teile der beiden Seilzüge 10 werden in Rillen über einen rückwärtigen Teil des Lagerauges 4 geführt. Dieser Teil ist in Form eines Nockens 13 ausgebildet. Nach einer Führung der beiden Seilzüge 10 über den Nocken 13 werden diese jeweils mit Rückzugsfedern 22 verbunden, sofern sie mit den Rückzugsfedern 22 nicht einstückig sind. Die Rückzugsfedern 22 wiederum sind an ihren Enden mit Haken 23 versehen.

Der Nocken 13 weist auf seinem Umfang, über den die Seilzüge 10 geführt sind, unterschiedliche Radien auf, wodurch sich unterschiedliche Hebelarme für die Seilzüge 10 zu dem Drehachsenmittelpunkt des Pedalhebels 3 ergeben. Durch diese Maßnahme ergibt sich aufgrund unterschiedlicher Federkräfte bzw. Momente ein fahrgeschwindigkeits- bzw. fahrpedalabhängiges Gefühl für einen Fahrer.

Nach dem Einlegen der Schlaufen 9 der Seilzüge 10 in die innere Umfangsnuten 12 wird in das Lagerauge 4 eine Lagerhülse 14 eingeschoben. Die Lagerhülse 14 wirkt als eine Art Reibbuchse zwischen den Seilschlaufen 9 und der inneren Umfangswand bzw. der Lagerbohrung in dem Lagerauge 4 des Pedalhebels 3.

Die Lagerhülse 14 weist außerdem eine axiale Länge auf, die etwas größer ist als die Breite des Lagerauges 4. Auf diese Weise wird sie unter einer entsprechenden Klemmwirkung, und damit spielfrei, zwischen zwei Schenkeln 15 des wenigstens über einen Teilbereich im Querschnitt eine U-Form aufweisenden Halters 5 geklemmt.

Durch eine Lagerbohrung 16 im Schenkel 15 des Halters 5 und durch die Lagerhülse 14 wird anschließend eine Gleitbuchse 17 geschoben.

Für eine genaue Positionierung eines Fensters 18 in der Lagerhülse 14, durch das ein Mitnahmestift 19 gesteckt ist, ist die Lagerhülse 14 auf einer Stirnseite mit einer rahmenartigen Erweiterung 29 versehen, damit bei der Montage der Lagerhülse 14 nebst Pedalhebel 3 das Fenster 18 die für die Montage des Mitnahmestiftes 19 geeignete Position erhält.

Damit die gewünschte Position auch beibehalten und eine geforderte Zuordnung eingehalten wird, ist die Gleitbuchse 17 auf ihrem Umfang mit aus dieser herausragenden Lappen 20 und Nasen 32 versehen, wobei die Lappen 20 an ihren vorderen Enden zusätzlich noch mit Rastnasen 20A versehen sind.

An die Größen der Nasen 32 angepaßte Aussparungen 21 und 31A befinden sich in den Lagerbohrungen 16 und in der inneren Umfangswand der Lagerhülse 14. Wird für eine Verbindung des Pedalhebels 3 mit dem Halter 5 bei der Montage die Gleitbuchse 17 eingeschoben, so kann dies nur in einer bestimmten Position erfolgen, wobei die Lappen 20 in die entsprechenden, asymmetisch angeordneten Nuten 31 der Lagerhülse 14 in Form von Rastverschlüssen einrasten. Im montierten Zustand kommen die Nasen 32 in den Aussparungen 31A der Lagerhülse 14 und in den Aussparungen 21 der Lagerbohrung 16 zum Ruhen. Auf diese Weise sind sowohl die Lagerhülse 14 als auch die Gleitbuchse 17 drehfest mit dem Halter 5 verbunden.

Der Halter 5 kann eine Bohrung 24 aufweisen, in die bei einem Automatik-Fahrzeug ein Kick-Down-Schalter 25 eingesetzt wird. Bei einem Schaltgetriebe befindet sich in diesem Bereich ein Anschlag für Vollgasfahrt.

Wenn die Fahrpedaleinheit für eine elektronische bzw. elektrische Verbindung mit dem Fahrzeugmotor vorgesehen ist, wird in die Gleitbuchse 17 auf der von der Einschubseite der Gleitbuchse 17 abgewandten Seite aus eine Geberwelle 26 eingeschoben. Die Geberwelle 26 kann als Potentiometerantriebswelle oder auch als Hallgeberantriebswelle in bekannter Weise ausgebildet sein, womit die jeweilige Stellung der Geberwelle 26 und damit auch des Pedales 1 elektrisch bzw. elektronisch an den Fahrzeugmotor zu dessen Steuerung weitergemeldet wird. Zu diesem Zwecke ist ein (nicht dargestellter) Mitnahmestift vorgesehen, der als Raststift oder auch als Gewindestift ausgebildet sein kann, und der entsprechend in die Geberwelle 26 einrastet oder in eine entsprechende Gewindebohrung 27 in die Umfangswand der Geberwelle 26 eingeschraubt wird. Das andere Ende des Mitnahmestiftes ist dann mit dem Pedalhebel 3 verbunden, womit eine Pedalhebelbewegung in eine Verdrehung der Geberwelle 26 umgesetzt wird.

Zur Durchführung des Mitnahmestiftes und damit zur drehfesten Verbindung mit dem Pedalhebel 3 muß selbstverständlich auch die Gleitbuchse 17 mit einem Fenster 28 versehen sein, das mit dem Fenster 18 in der Lagerhülse fluchtet. Dabei ist die Größe der beiden Fenster 18 und 28 so zu wählen, daß sich der Mitnahmestift und damit auch der Pedalhebel 3 frei zwischen oberen und unteren Anschlägen, die den Vollast- und den Leerlaufanschlag bedeuten, bewegen können.

Wie ersichtlich, hat die Gleitbuchse 17 damit eine Doppelfunktion, nämlich zum einen dient sie für die Lagerhülse 14 als drehsichere Montage- und Verschlußbuchse, wozu sie auf einfache Weise durch Rastverschlüsse bzw. klipsartig mit der Lagerhülse 14 verbunden werden kann, und zum anderen dient sie für die Geberwelle 26 als Gleitbuchse.

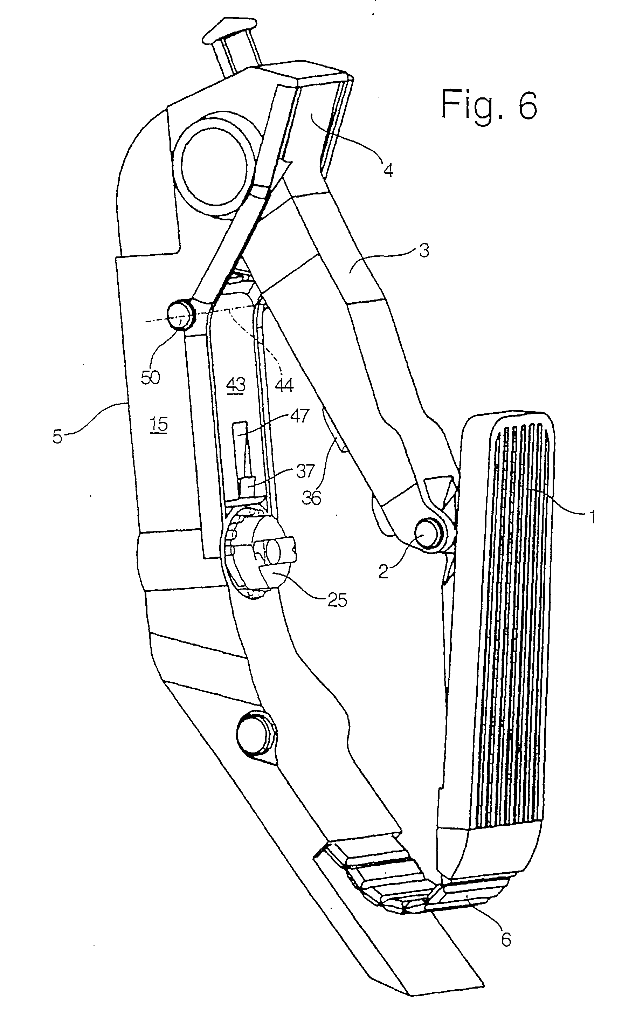

Zur Abdeckung des offenen Teiles des Halters 5, d.h. zur Abdeckung des Halters 5 in dem U-förmigen Bereich mit den beiden Schenkeln 15, dient ein Deckel 43, der um eine Schwenkachse 44 (siehe Fig. 6) schwenkbar mit dem Halter 5 verbindbar ist. Gleichzeitig dient der Deckel 43 jedoch auch zur Befestigung der beiden Rückzugsfedern 22, wobei durch die Art der Befestigung und der Verbindung des Deckels 43 mit dem Halter 5 auch zusätzlich noch eine einfache und schnelle Montage der Rückzugsfedern 22 gegeben ist.

Nach erfolgtem Einlegen der Schlaufen 9 in die Umfangsnuten 12 und einem Einsetzen der Nippel 7 in die Aussparungen 11 des Pedalhebels 3 werden die Haken 23 der Rückzugsfedern 22 jeweils in einen Steg 45 des Deckels 43 eingehängt. Die beiden Stege 45 befinden sich auf der Unterseite und auf der zum Halter 5 gerichteten Seite des Deckels 43. Die Haken 23 werden dabei in Bohrungen 46 der Stege 45 eingehängt.

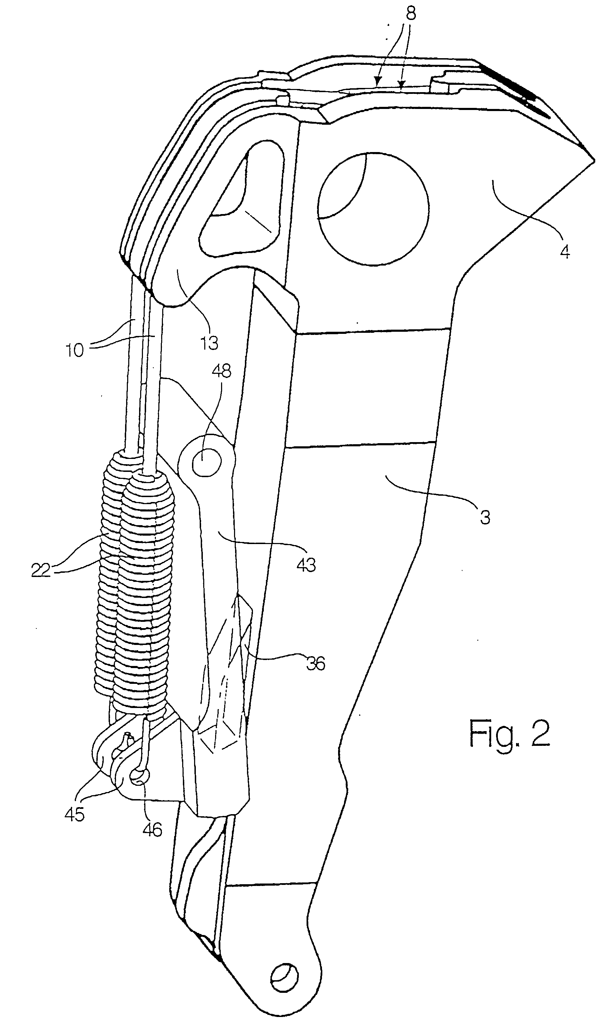

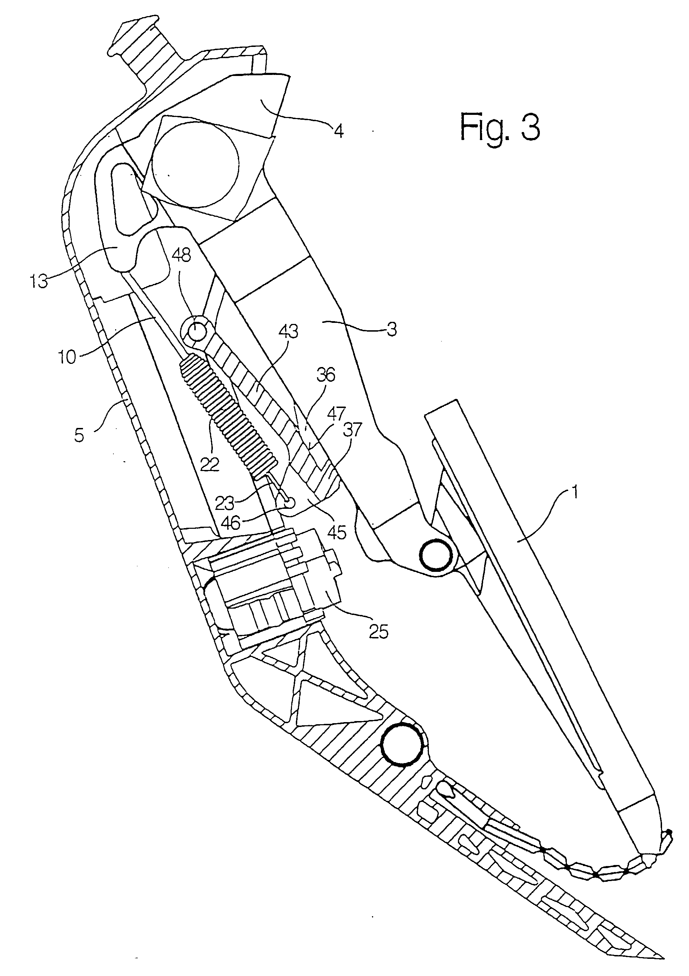

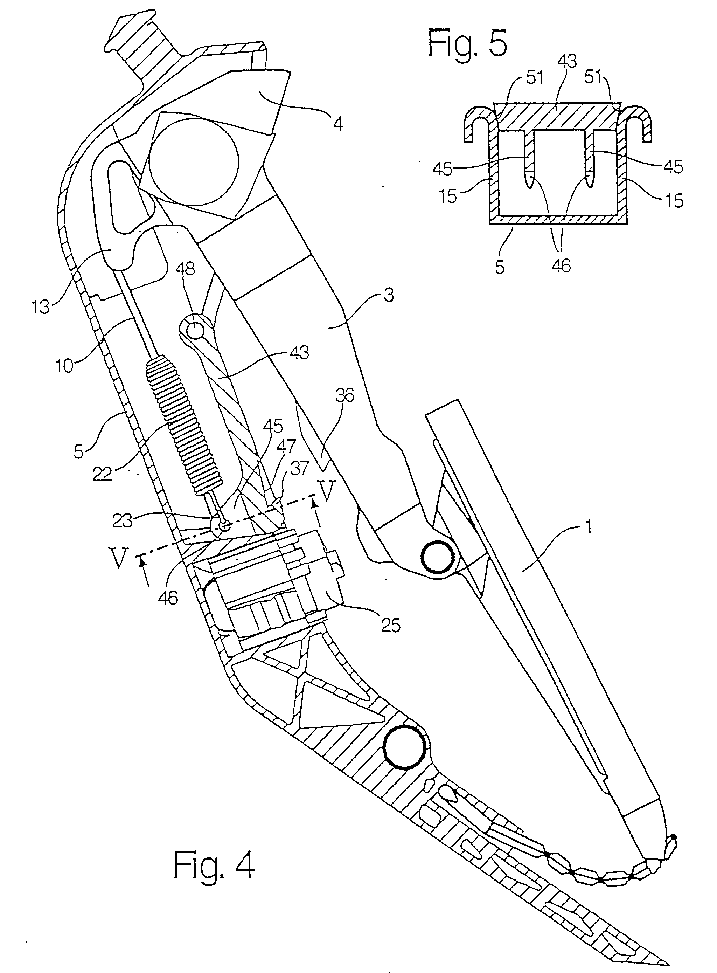

Aus der Fig. 2 ist diese Vormontage an dem Pedalhebel 3 ersichtlich. Wie weiterhin aus dieser Figur, insbesondere jedoch auch aus den Fig. 3 und 4, ersichtlich ist, weist der Pedalhebel 3 auf seiner Unterseite einen Haken 36 auf. Ein Gegenhaken 37 ragt aus der Oberseite des Deckels 43. Haken 36 und Gegenhaken 37 besitzen komplementäre Schrägen, so daß der Deckel 43 für eine leichte Montage - gegebenenfalls unter leichter Vorspannung durch die Rückzugsfedern 22 - an dem Pedalhebel 3 vor dessen Verbindung mit dem Halter 5 gehalten ist.

Wie aus den Figuren weiterhin ersichtlich ist, besitzt der Haken 36 einen verlängerten Ansatz bzw. ist derart ausgebildet, daß er auf der zum Halter 5 gerichteten Seite als Anlage für eine Anlagefläche 47 des Deckels 43 wirkt. Die Anlagefläche 47 ist durch eine schrägverlaufende Ausnehmung in der Oberfläche des Deckels 43 gebildet (siehe Fig. 3, 4 und 6). Der Ansatz bzw. die Fläche des Hakens 36, an der die Anlagefläche 47 des Deckels 43 anliegt, ist dabei zusammen mit der Anlagefläche 47 des Deckels 43 so ausgebildet, daß der an dem Pedalhebel 3 anliegende Deckel 43 vor der Montage mit seiner Längsachse wenigstens annähernd in einer Flucht zur Schwenkachse 44 im Halter 5 liegt. Diese Ausgestaltung bringt eine weitere Vereinfachung der Montage der Fahrpedaleinheit. Dies ist aus den Fig. 3 und 4 ersichtlich, wobei Fig. 3 die Montagestellung zeigt, wobei der Pedalhebel 3 mit dem Halter 5 über die Lagerhülse 14 und die Gleitbuchse 17 bereits verbunden sind, und wobei der Deckel 43 mit seinem Gegenhaken 37 noch in dem Pedalhebel 3 eingehängt ist.

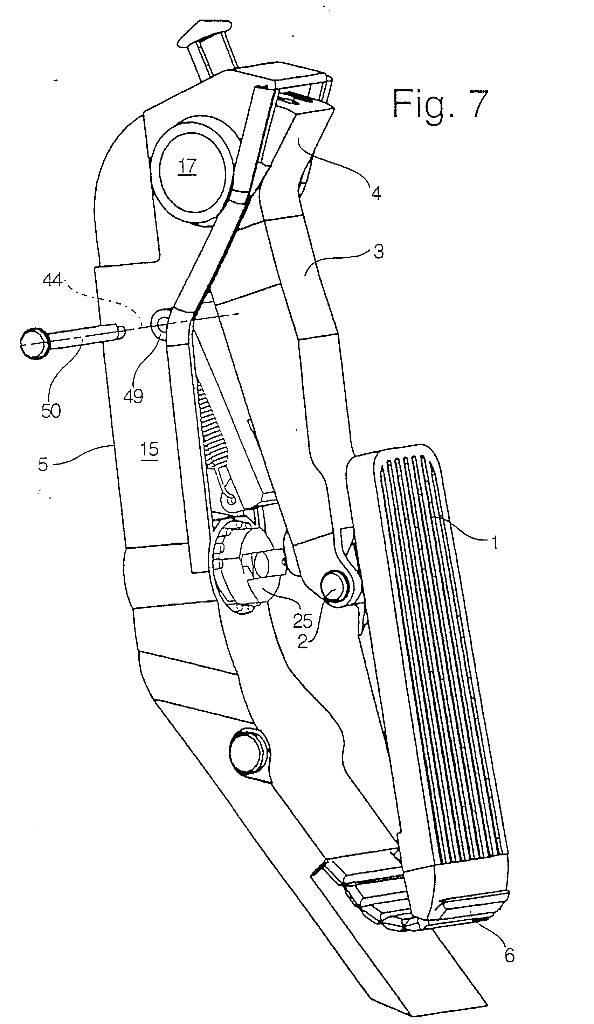

Ein vormontierter Pedalhebel 3, wie er in der Fig. 2 dargestellt ist, der die bereits beschriebenen Bauteile aufweist und deshalb nachfolgend als Vormontageeinheit bezeichnet werden soll, wird bei der Montage (s. Fig. 7) an dem Halter 5 mit der Gleitbuchse 17 drehbar befestigt.

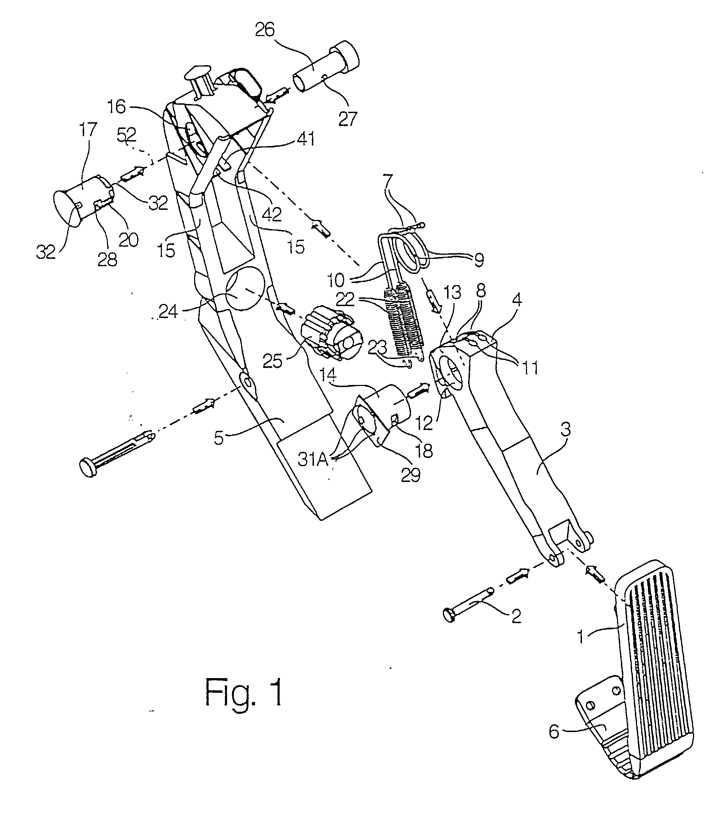

Anschließend wird durch Verdrehen der Vormontageeinheit, also des Pedalhebels 3 mit allen daran angebrachten Bauteilen, um eine konzentrisch zur Gleitbuchse 17 verlaufende Drehachse 52 (s. Fig. 1) die Lagerbohrung 48 des Deckels 43 mit Lagerbohrungen 49 in dem Halter 5 zur Deckung gebracht, so daß durch die Lagerbohrungen 48, 49 ein Steckbolzen 50 gesteckt werden kann, wonach die Vormontageeinheit um die durch den Steckbolzen 50 definierte Schwenkachse 44 verschwenkbar ist.

Durch eine Drehbewegung der beschriebenen Vormontageeinheit um die Schwenkachse 44 in Richtung des Halters 5 wird die Verbindung zwischen dem Haken 36 und dem Gegenhaken 37 gelöst, wonach durch die einwirkenden Kräfte der Rückstellfedern 22 der Deckel 43 selbständig in seine vorgesehene Endstellung verschwenkt.

Der Montagevorgang ist, wie bereits erwähnt, aus der Fig. 7 ersichtlich, während Fig. 6 die Fahrpedaleinheit in montiertem Zustand zeigt.

Wie aus der Fig. 5 ersichtlich ist, schließt der Dekkel 43 auf seiner Oberseite nahezu bündig mit den beiden Schenkeln 15 des Halters 5 ab, wozu er mit Zentrierschrägen 51 an seinen Längsseiten versehen ist, da die Schenkel 15 auf der Oberseite abgerundet und mit einer Umbördelung versehen sind.

Die beschriebene Erfindung ist nicht auf das vorliegende Ausführungsbeispiel beschränkt. So kann der Halter 5 beispielsweise auch mit einem hängenden Fahrpedal, also einem Fahrpedal ohne untere Verbindung zum Fahrzeugboden bzw. zum Halter 5, verbunden sein.

## Patentansprüche

1. Fahrpedaleinheit für Fahrzeuge mit einem an einem Pedalhebel (3) befestigten Pedal (1), wobei der Pedalhebel (3) auf der von dem Pedal (1) abgewandten Seite über ein Lagerauge (4) mit einer Lagerstelle drehbar in Lagerbohrungen (16) gelagert ist, wobei wenigstens eine auf den Pedalhebel (3) einwirkende Rückzugsfeder (22) vorgesehen ist, wobei die Lagerstelle zwei mit den Lagerbohrungen (16) versehene Schenkel (15) eines Halters (5) aufweist, und wobei der Halter (5) wenigstens über einen Teilbereich im Querschnitt eine U-Form aufweist,
**dadurch gekennzeichnet**, daß
die zu dem Pedalhebel (3) gerichteten Schenkel (15) des Halters (5) teilweise durch einen Deckel (43) abgedeckt sind, wobei der Deckel (43) und der Halter (5) jeweils wenigstens eine weitere Lagerbohrung (48,49) aufweisen, durch welche nach einer Drehbewegung des Pedalhebels (3) um eine durch den Halter (5) verlaufende Drehachse (52) ein eine Schwenkachse (44) definierender Steckbolzen (50) gesteckt ist, wobei in den Deckel (43) wenigstens eine Rückzugsfeder (22) auf der von der Schwenkachse (44) abgewandten Seite eingehängt ist, wobei der Deckel (43) von der Rückzugsfeder (22) um die Schwenkachse (44) verschwenkbar ist und wobei der Deckel (43) mit einem Gegenhaken (37) versehen ist, der während mindestens eines Teils der Drehbewegung um die Drehachse (52) über einen am Pedalhebel (3) vorgesehenen Haken (36) eine Verbindung zu dem Pedalhebel (3) herstellt.

2. Fahrpedaleinheit nach Anspruch 1,
**dadurch gekennzeichnet,** daß die Schwenkachse (44) des Deckels (43) zur Drehachse (52) des Pedalhebels (3) kinematisch derart angeordnet ist, daß durch Verschwenken des Pedalhebels (3) in Richtung des Halters (5) der Haken (36) und der Gegenhaken (37) voneinander lösbar sind.

3. Fahrpedaleinheit nach Anspruch 1 oder 2,
**dadurch gekennzeichnet,** daß die Rückzugsfeder (22) an einem zwischen die Schenkel (15) des Halters (5) nach innen ragenden Steg (45) des Deckels (43) eingehängt ist.

4. Fahrpedaleinheit nach einem der Ansprüche 1 bis 3,
**dadurch gekennzeichnet,** daß der Deckel (43) auf der von der Schwenkachse (44) abgewandten Seite mit einem Verbindungsglied (37) versehen ist, über das der Deckel (43) vor seiner Verbindung mit dem Halter (5) und bei eingehängter Rückzugsfeder (22) beweglich mit dem Pedalhebel (3) verbunden ist.

5. Fahrpedaleinheit nach Anspruch 4,
**dadurch gekennzeichnet,** daß für die Verbindung mit dem Pedalhebel (3) Haken (36) und Ösen oder Gegenhaken (37) vorgesehen sind.

6. Fahrpedaleinheit nach Anspruch 4 oder 5,
**dadurch gekennzeichnet,** daß der Pedalhebel (3) auf seiner zum Halter (5) gerichteten Seite einen Ansatz (Haken 36) aufweist, an dem der Deckel (43) vor seiner Verbindung mit dem Halter (5) anliegt, wobei eine Anlagefläche (47) des Deckels (43) an dem Ansatz derart anliegt, daß der Deckel (43) wenigstens annähernd in einer Flucht zur Schwenkachse (44) im Halter (5) liegt.

7. Fahrpedaleinheit nach einem der Ansprüche 1 bis 6,
**dadurch gekennzeichnet,** daß der Deckel (43) an seinen Längsseiten mit Zentrierschrägen (51) versehen ist.

8. Fahrpedaleinheit nach einem der Ansprüche 1 bis 7,
**dadurch gekennzeichnet,** daß die Schwenkachse (44) einen Steckbolzen (50) aufweist.

9. Fahrpedaleinheit nach einem der Ansprüche 1 bis 8,
**dadurch gekennzeichnet,** daß die Rückzugsfeder (22) mit einem Seil- oder Drahtzug (10) versehen ist, dessen freies Ende im Bereich der äußeren Umfangswand des Lagerauges (4) befestigt ist, wobei der Seil- oder Drahtzug (10) von dem äußeren Umfangsbereich des Lagerauges (4) aus in Form einer Schlaufe (9) über einen Teilumfangsschlitz (8) in das Innere des Lagerauges (4) geführt ist, von wo aus er nach seiner Umschlingung aus dem gleichen oder einem anderen Teilumfangsschlitz (8) wieder herausführt und über einen Bereich des Lagerauges (4) des Pedalhebels (3) geführt ist, der als Nocken (13) ausgebildet ist, wobei der Nocken (13) eine derartige Form aufweist, daß sich bei der Überführung des Seil- oder Drahtzuges (10) über den Nocken (13) unterschiedliche Hebelarme für den Seil- oder Drahtzug (10) einstellen.

## Claims

1. An accelerator pedal unit for motor vehicles having a pedal (1) secured to a pedal lever (3), the pedal lever (3) being rotatably mounted at the end remote from the pedal (1) by means of a bearing eye (4) having a bearing point which is rotatable in bearing bores (16), at least one return spring (22) being provided which acts on the pedal lever (3), the bearing point having a holder (5) comprising two legs (15) provided with bearing bores (16) and the holder (5) having a U-shaped cross section in at least a part-region,
**characterised in that**
the legs (15) of the holder (5) directed towards the pedal lever (3) are partially covered by a cover (43), the cover (43)and the holder (5) each having at least one additional bore (48, 49) through which, by a rotating motion of the lever pedal (3) about a pivot axis (52) running through the holder (52), a removable bolt (50) defining a pivot axis (44) is inserted, at least one return spring (22) being hooked into the cover (43) at the end remote from the pivot axis (44), the cover (43) being pivotable by means of the return spring (22) about the pivot axis (44) and the cover (43) being provided with a counter-hook (37) which forms a connection to the pedal lever (3) during at least a part of the rotating motion about the rotation axis (52) by means of a hook (36) provided on the pedal lever (3).

2. An accelerator pedal unit as claimed in claim 1,
**characterised in that**
the pivot axis (44) of the cover (43) is kinematically so arranged relative to the rotation axis (52) of the pedal lever (3) that by pivoting the pedal lever (3) in the direction of the holder (5), the hook (36) and the counter-hook (37) can be released from one another.

3. An accelerator pedal unit as claimed in claim 1 or 2,
**characterised in that**
the return spring (22) is hooked onto a bracket (45) of the cover (43) projecting inwardly between the legs (15) of the holder (5).

4. An accelerator pedal unit as claimed in one of claims 1 to 3,
**characterised in that**
at the end remote from the pivot axis (44), the cover (43) is provided with a connecting member (37) by means of which the cover (43) is movably connected to the pedal lever (3) before it is connected to the holder (5) and with the return spring (22) is hooked thereon.

5. An accelerator pedal unit as claimed in claim 4,
**characterised in that**
hooks (36) and eyes or counter-hooks (37) are provided for the connection to the pedal lever (3).

6. An accelerator pedal unit as claimed in claim 4 or 5,
**characterised in that**
at its end directed towards the holder (5), the pedal lever (3) has a shoulder (hook 36), against which the cover (43) lies before it is connected to the holder (5), a bearing surface (47) of the cover (43) lying against the shoulder in such a way that the cover (43) lies in the holder (5) at least almost in alignment with the pivot axis (44).

7. An accelerator pedal unit as claimed in one of claims 1 to 6,
**characterised in that**
the cover (43) is provided with centring inclined faces (51) on its longitudinal ends.

8. An accelerator pedal unit as claimed in one of claims 1 to 7,
**characterised in that**
the pivot axis (44) has a removable bolt (50).

9. An accelerator pedal unit as claimed in one of claims 1 to 8,
**characterised in that**
the return spring (22) is provided with a control cable or wire (10), the free end of which is secured in the region of the external circumferential wall of the bearing eye (4), the control cable or wire (10) being inserted from the external circumferential region of the bearing eye (4) in the shape of a loop (9) through a part-circumferential slit (8) into the interior of the bearing eye (4), from where it is threaded back out, after being looped, from the same or another part-circumferential slit (8) and fed across a region of the bearing eye (4) of the pedal lever (3), which is designed as a cam (13), the cam (13) being of such a shape that different lever arms for the control cable or wire (10) adjust the control cable or wire (10) as it is fed across the cam (13).

## Revendications

1. Ensemble de pédale d'accélérateur pour véhicules, avec une pédale (1) fixée à un levier de pédale (3), le levier de pédale (3) étant monté de façon à pouvoir tourner dans des perçages de tourillonnement (16), sur le côté opposé à la pédale (1), par l'intermédiaire d'un oeillet de tourillonnement (4) ayant un point de tourillonnement, au moins un ressort de rappel (22), agissant sur le levier de pédale (3), étant prévu, le point de tourillonnement présentant deux branches (15), munies des perçages de tourillonnement (16), d'un support (5), et le support (5) présentant au moins une section transversale en forme de U, sur une zone partielle,
caractérisé en ce que
les branches (15), orientées vers le levier de pédale (3), du support (5), sont partiellement couvertes par un couvercle (43), le couvercle (43) et le support (5) présentant chacun au moins un autre perçage de tourillonnement (48, 49), à travers lequel est enfiché un boulon à enfichage (50), définissant un axe de pivotement (44), après un mouvement de rotation du levier de pédale (3) autour d'un axe de rotation (52) s'étendant à travers le support (5), au moins un ressort de rappel (22) étant accroché dans le couvercle (43), sur le côté opposé à l'axe de pivotement (44), le couvercle (43) étant susceptible de pivoter autour de l'axe de pivotement (44) par l'effet du ressort de rappel (22), et le couvercle (43) étant muni d'un contre-crochet (37) qui, pendant au moins une partie du mouvement de rotation autour de l'axe de rotation (52), établit une liaison envers le levier de pédale (3), par l'intermédiaire d'un crochet (36) prévu sur le levier de pédale (3).

2. Ensemble de pédale selon la revendication 1, caractérisé en ce que l'axe de pivotement (44) du couvercle (43) est disposé cinématiquement, par rapport à l'axe de rotation (52) du levier de pédale (3), de manière que le crochet (36) et le contre-crochet (37) soient désolidarisables l'un de l'autre, par un pivotement du levier de pédale (3) dans la direction du support (5).

3. Ensemble de pédale selon la revendication 1 ou 2, caractérisé en ce que le ressort de rappel (22) est accroché à une nervure (45) du couvercle (43), se projetant vers l'intérieur, entre les branches (15) du support (5).

4. Ensemble de pédale selon l'une des revendications 1 à 3, caractérisé en ce que le couvercle (43) est muni, sur le côté opposé à l'axe de pivotement (44), d'un organe de liaison (37), par l'intermédiaire duquel le couvercle (43) est relié avec une mobilité au levier de pédale (3), avant sa liaison au support (5) et lorsque le ressort de rappel (22) est accroché.

5. Ensemble de pédale selon la revendication 4, caractérisé en ce qu'un crochet (36) et des oeillets ou des contre-crochets (37) sont prévus pour assurer la liaison au levier de pédale (3).

6. Ensemble de pédale selon la revendication 4 ou 5, caractérisé en ce que le levier de pédale (3) présente, sur son côté tourné vers le support (5), un appendice (crochet 36) sur lequel le couvercle (43) appuie avant sa liaison au support (5), une surface d'appui (47) du couvercle (43) appuyant sur l'appendice, de manière que le couvercle (43) soit au moins à peu près en alignement par rapport à l'axe de pivotement (44) dans le support (5).

7. Ensemble de pédale selon l'une des revendications 1 à 6, caractérisé en ce que le couvercle (43) est muni de chanfreins de centrage (51) sur ses côtés longitudinaux.

8. Ensemble de pédale selon l'une des revendications 1 à 7, caractérisé en ce que l'axe de pivotement (44) présente un boulon à enfichage (50).

9. Ensemble de pédale selon l'une des revendications 1 à 8, caractérisé en ce que le ressort de rappel (22) est muni d'un câble ou d'un fil de transmission (10), dont l'extrémité libre est fixée dans la zone de la paroi périphérique extérieure de l'oeillet de tourillonnement (4), le câble ou le fil de transmission (10) étant guidé par la zone périphérique extérieure de l'oeillet de tourillonnement (4), en prenant forme d'une boucle (9), en passant sur une fente périphérique (8) ménagée à l'intérieur de l'oeillet de tourillonnement (4), d'où, après son enlacement, à partir de la même fente périphérique partielle (8) ou d'une autre, il est de nouveau sorti et est guidé sur une zone de l'oeillet de tourillonnement (4) du levier de pédale (3) qui est réalisée sous la forme d'une came (13), la came (13) ayant une forme telle que, lors du passage du câble ou du fil de transmission (10) sur la came. (13), des bras de levier différents s'établissent pour le câble ou le fil de transmission (10).
